# EUROPÄISCHE PATENTSCHRIFT

(11) **EP 2 314 145 B1**
(45) Veröffentlichungstag und Bekanntmachung des Hinweises auf die Patenterteilung: **23.08.2017**
(21) Anmeldenummer: 10013250.5
(22) Anmeldetag: 02.10.2010
(51) Int. Cl.: A01D 34/416, D01F 6/00

(54) **Mähfaden für einen Freischneider und Verfahren zur Herstellung eines solchen Mähfadens**
Cutting line for a string cutter and method for producing same
Fil de tonte pour une débroussailleuse et procédé de fabrication d'un tel fil de tonte

(30) Priorität: 24.10.2009 DE 102009050593
(43) Veröffentlichungstag der Anmeldung: 27.04.2011
(73) Patentinhaber: Andreas Stihl AG & Co. KG, 71336 Waiblingen (DE)
(72) Erfinder: Schierling, Roland, Dr., 71563 Affalterbach (DE)
(74) Vertreter: Wasmuth, Rolf

(56) Entgegenhaltungen:
- WO-A1-2006/131658
- US-A- 5 524 350
- US-A1- 2003 143 396
- US-A1- 2003 192 190
- US-B1- 6 171 697

## Beschreibung

Bei handgeführten, motorisch angetriebenen Freischneidern kommt ein schnell rotierender Schneidkopf mit einem Mähfaden zum Einsatz. Infolge der wirkenden Fliehkräfte richtet sich der Mähfaden radial zur Drehachse aus und schneidet Gras oder andere Pflanzenteile ab. Die hauptsächliche Belastung des Mähfadens entsteht durch radial wirkende Fliehkräfte, die auf das Fadenmaterial in dessen Axialrichtung einwirken.

Damit sich der Mähfaden unter Betriebslast nicht zu sehr dehnt oder gar reißt, wird ein extrudierter Kunststofffaden als Rohling hergestellt und im Anschluss an den Extrusionsprozess unter plastischer Verformung gereckt. Beim Recken orientieren sich die polymeren Kettenmoleküle in der Längsrichtung. Bei hohen Reckverhältnissen werden hohe Längssteifigkeit und -festigkeit erzielt, was Dehnung und Abrissneigung reduziert.

Eine weitere Belastung des Mähfadens besteht aber im Verschleiß, der durch das Auftreffen des Mähfadens auf das Schnittgut oder auf härtere Gegenstände wie Steine oder dergleichen entsteht. Als Schadensbild ist insbesondere ein Aufspleißen des Mähfadens zu beobachten. Das Aufspleißen ist auf mangelhafte Festigkeit quer zur Fadenlängsrichtung zurückzuführen. Die infolge der Reckung in Längsrichtung ausgerichteten Kettenmoleküle bringen als Nachteil mit sich, dass die Querfestigkeit innerhalb des Mähfadens verringert wird, was die Neigung zum Aufspleißen begünstigt.

WO-A-2006/131658 offenbart einen Faden, der aus einem mit plättchenförmigen Partikeln gefüllten Kunststoff extrudiert und anschließend gereckt ist.

US-B-5,524,350 offenbart einen Mähfaden, der aus einem mit Partikeln gefüllten Kunststoff extrudiert und anschließend gereckt ist.

US-A-2003/0192190 offenbart einen Mähfaden, der aus einem mit Partikeln gefüllten Kunststoff extrudiert ist.

Der Erfindung liegt die Aufgabe zugrunde, einen Mähfaden nach US-A-2003/0192190 derart weiterzubilden, dass dessen Verschleißfestigkeit erhöht ist und er somit für eine neue Verwendung geeignet ist. Diese Aufgabe wird durch eine Verwendung eines Mähfadens mit den Merkmalen des Anspruchs 1 gelöst.

Beim erfindungsgemäßen Mähfaden ist vorgesehen, dass ein Kunststoff mit einer Füllung aus plättchenförmigen Partikeln zum Einsatz kommt. Aus diesem mit plättchenförmigen Partikeln gefüllten Kunststoff wird ein Fadenrohling extrudiert und anschließend im erstarrten Zustand in Richtung seiner Längsachse unter plastischer Verformung derart gereckt, dass sich die eingebetteten Partikel zumindest vorrangig in Richtung der Längsachse ausrichten. Es entsteht ein Mähfaden, innerhalb dessen die plättchenförmigen, im Wesentlichen ebenen Partikel jeweils in einer Ebene liegen, die parallel zur Längsachse des Mähfadens ausgerichtet ist.

Die vorgenannte Ausrichtung der Partikel infolge des Reckvorganges führt zu einer gezielten Verstärkung des Kunststoffmaterials in der Längsrichtung des Mähfadens und auch quer dazu. Dies beruht auf der Erkenntnis, dass die plättchenförmigen Partikel im Kunststoff eine richtungsabhängige Verstärkungswirkung entfalten, die sich im Wesentlichen nur in der Ebene der einzelnen flächigen Partikel auswirkt. Bei einer unorientierten Anordnung der flächigen Partikel liegt ein erheblicher Anteil davon quer zur Längsachse des Mähfadens und kann in Richtung der Längsachse des Mähfadens, also in Richtung der Fliehkraftbelastung nicht wirken. Möglicherweise können sie die Tragfähigkeit des gefüllten Kunststoffes sogar herabsetzen. Durch den Reckvorgang werden aber die zunächst wahllos räumlich verteilten Partikel einschließlich derjenigen, die unerwünscht quer zur Längsachse des Mähfadens liegen, umorientiert und gemeinsam mit den polymeren Kettenmolekülen in der Axialrichtung des Mähfadens ausgerichtet. Einerseits wird hierdurch der Mähfaden in seiner Axialrichtung durch die flächigen Partikel verstärkt, wobei diese Verstärkung unterstützend auf die durch den Reckvorgang in Axialrichtung ausgerichteten polymeren Kettenmoleküle einwirkt. Der Mähfaden erhält in Längs- bzw.

Axialrichtung eine erhöhte Steifigkeit und auch Festigkeit. Da die flächigen, plättchenförmigen Partikel aber gleichzeitig auch eine Erstreckung in Radial- bzw. Tangentialrichtung zur Längsachse des Mähfadens aufweisen, beseitigen sie den beim Stand der Technik zu beobachtenden Nachteil der Aufspleißneigung. Ein Aufspalten bzw. Aufspleißen des Fadenquerschnitts wird durch die auch in Querrichtung wirkende Haltekraft der Partikel zuverlässig vermieden. Der erfindungsgemäße Mähfaden ist hinsichtlich seiner Verschleißfestigkeit deutlich verbessert.

Die plättchenförmigen Partikel sind zweckmäßig als Nanopartikel ausgebildet und weisen bevorzugt in ihrer Ebene eine Größe von 500 nm bis 1000 nm und eine Dicke von 0,5 nm bis 2 nm auf. Vorteilhaft sind sie durch ein Schichtsilikat gebildet. Der Gewichtsanteil der Partikel im Mähfaden liegt zweckmäßig in einem Bereich von einschließlich 1 % bis einschließlich 5 % und bevorzugt in einem Bereich von einschließlich 2 % bis einschließlich 3 %. Als Kunststoffmaterial, in das die Partikel eingebettet sind, hat sich Polyamid als zweckmäßig herausgestellt.

Ein Ausführungsbeispiel der Erfindung ist nachfolgend anhand der Zeichnung näher beschrieben. Es zeigen:
- Fig. 1: in einer Übersichtsdarstellung einen handgeführten Freischneider mit einem erfindungsgemäß ausgeführten Mähfaden;
- Fig. 2: in einer schematischen Seitenansicht einen Ausschnitt aus einem mit Nanopartikeln gefüllten, extrudierten Kunststofffadenrohling;
- Fig. 3: den zum erfindungsgemäßen Mähfaden gereckten Fadenrohling nach Fig. 2;
- Fig. 4: eine Querschnittsdarstellung des Mähfadens nach Fig. 3;
- Fig. 5: eine vergrößerte Darstellung der Einzelheit V nach Fig. 2 mit im extrudierten Zustand unorientiert im Kunststoff eingebetteten plättchenförmigen Nanopartikeln;
- Fig. 6: eine vergrößerte Darstellung der Einzelheit VI nach Fig. 3 mit in Richtung der Längsachse ausgerichteten Nanopartikeln;
- Fig. 7: eine vergrößerte Darstellung der Einzelheit VII nach Fig. 4 mit Einzelheiten zur räumlichen Orientierung der plättchenförmigen Nanopartikel im Querschnitt des Mähfadens.

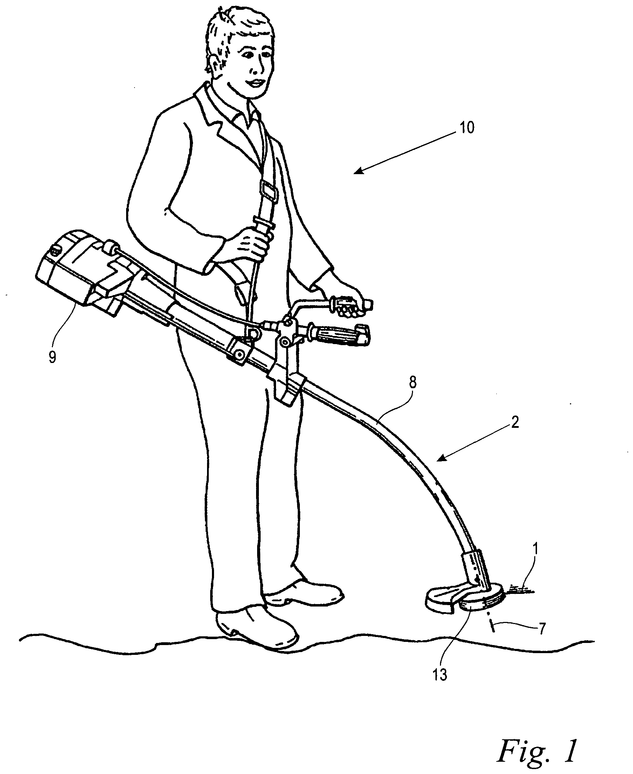

Fig. 1 zeigt in einer Übersichtsdarstellung einen Freischneider 2, der von einer Bedienperson 10 getragen und von Hand geführt wird. Der Freischneider 2 umfasst einen Antriebsmotor 9, der als Elektromotor oder als Verbrennungsmotor ausgeführt sein kann und der an einem benutzerseitigen Ende eines Führungsrohres 8 angeordnet ist. Am gegenüberliegenden Ende des Führungsrohres 8 ist ein Schneidkopf 13 mit einem radial davon hervorstehenden Mähfaden 1 angeordnet und drehbar gelagert. Über eine nicht dargestellte, im Führungsrohr 8 gelagerte Antriebswelle wird der Schneidkopf 13 zusammen mit dem Mähfaden 1 mittels des Antriebsmotors 9 um eine Drehachse 7 drehend angetrieben. Die hierbei auf den Mähfaden 1 wirkenden Fliehkräfte richten diesen in radialer Richtung aus. Die Bedienperson 10 führt den Schneidkopf 13 mitsamt dem Mähfaden 1 derart an eine zu bearbeitende Oberfläche, dass der radial ausgerichtete Mähfaden 1 infolge seiner Umlaufbewegung auf das zu mähende Gut wie Gras oder dergleichen auftrifft. Das Gras oder andere Pflanzen werden hierbei abgemäht. Der Mähfaden 1 wird infolge der wirkenden Fliehkräfte in seiner radial zur Drehachse 7 liegenden Längsachse belastet. Außerdem kann er quer dazu aufspleißen.

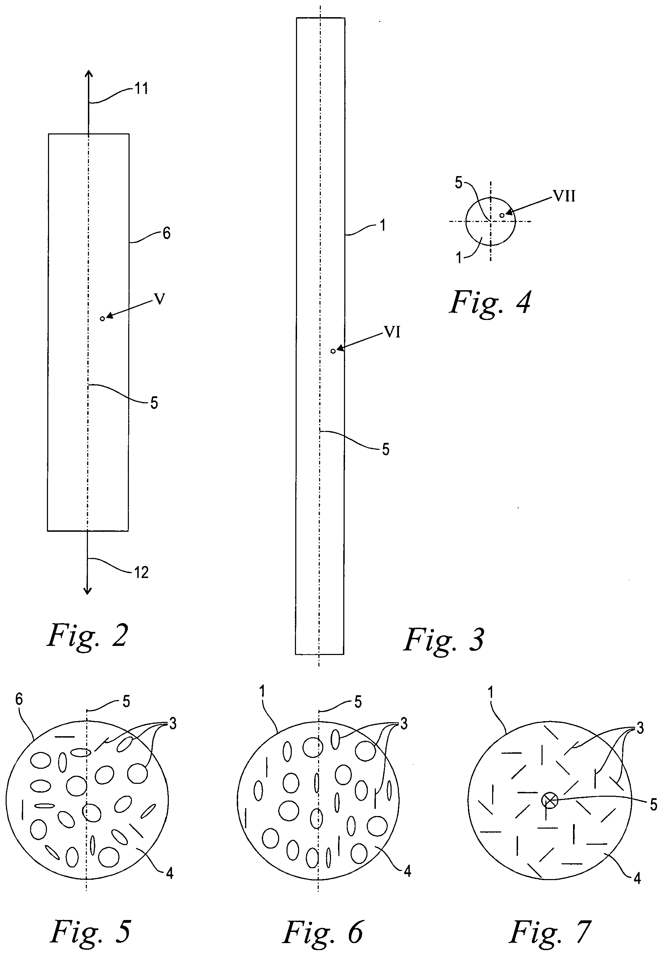

Fig. 2 zeigt in einer schematischen Seitenansicht einen Ausschnitt eines Fadenrohlings 6, der sich entlang einer Längsachse 5 erstreckt. Eine mit V gekennzeichnete Einzelheit ist in vergrößerter Detaildarstellung in Fig. 5 gezeigt, demnach der Fadenrohling 6 aus einem Kunststoff 4 gebildet ist, in den eine Vielzahl von Partikeln 3 eingebettet ist. Die Partikel 3 sind in Form von ebenen Plättchen ausgebildet, die hier der Einfachheit halber schematisch als Kreisscheiben dargestellt sind. In der Praxis weisen sie eine unregelmäßige Form auf. In jedem Falle aber haben sie eine zumindest näherungsweise ebene, flache Form, wobei die Erstreckung der Partikel 3 in ihrer Ebene eine Größe im Mikrometerbereich oder kleiner aufweist. Bevorzugt sind die Partikel 3 als Nanopartikel mit einer maximalen Erstreckung im Sub-Mikrometerbereich, nämlich im Nanometerbereich ausgebildet, wobei die Erstreckung der Partikel 3 in ihrer Ebene eine Größe von circa 500 nm bis circa 1000 nm aufweist. Die Dicke der Partikel 3 ist im Vergleich hierzu um mehrere Größenordnungen geringer und liegt in einem Bereich von 0,5 nm bis 2 nm und beträgt im gezeigten Ausführungsbeispiel etwa 1 nm. Der Gewichtsanteil der Partikel 3 im Fadenrohling 6 und auch im später daraus hergestellten Mähfaden 1 (Fig. 1, 3) liegt vorteilhaft in einem Bereich von einschließlich 1 % bis einschließlich 5 % und insbesondere in einem Bereich von einschließlich 2 % bis einschließlich 3 %. Als Material für den Kunststoff 4 ist Polyamid gewählt.

Für die Partikel 3 ist als Material ein Schichtsilikat gewählt. Dieses ist im gezeigten Ausführungsbeispiel aus Bentonit gebildet, welches durch Phasenseparation, Interkalation und anschließende Exfoliation in einzelne Plättchen der vorgenannten Größe aufgespalten ist. Die einzelnen plättchenförmigen Partikel 3 sind gleichmäßig im Kunststoff 4 verteilt.

Aus dem Material nach Fig. 5 wird der Fadenrohling 6 nach Fig. 2 extrudiert, wobei die Partikel 3 im extrudierten Zustand nicht nur in ihrem Ort, sondern auch in ihrer räumlichen Orientierung gleichmäßig verteilt sind, also keine nennenswerte räumliche Vorzugsorientierung aufweisen. Insbesondere ist in der Darstellung nach Fig. 5 zu erkennen, dass ein erheblicher Anteil der plättchenförmigen Partikel 3 Ebenen aufspannt, die quer zur Längsachse 5 liegen. Hierdurch können sie keine Verstärkungswirkung in Richtung der Längsachse 5 ausüben oder sogar eine schwächende Wirkung in dieser Richtung entfalten.

Nach dem Extrusionsvorgang des Fadenrohlings 6 wird dieser im erstarrten Zustand in Richtung seiner Längsachse 5 durch Aufbringen einer Längskraft entsprechend den Pfeilen 11, 12 nach Fig. 2 unter plastischer Verformung gereckt, so dass der Mähfaden 1 gebildet wird, von dem ein Ausschnitt schematisch in Fig. 3 dargestellt ist. Der Mähfaden 1 nach Fig. 3 ist gegenüber dem Fadenrohling 6 nach Fig. 2 gelängt, weist aber eine geringere Querschnittsfläche auf. Eine Querschnittsansicht des Mähfadens 1 quer zur Längsachse 5 ist in Fig. 4 dargestellt, demnach ein kreisscheibenförmiger Querschnitt vorgesehen ist. Es kann aber auch eine abweichende Querschnittsform zweckmäßig sein.

Fig. 6 zeigt eine vergrößerte Darstellung der Einzelheit VI nach Fig. 3, demnach die in den Kunststoff 4 eingebetteten plättchenförmigen Partikel 3 zumindest vorrangig in Richtung der Längsachse 5 ausgerichtet sind. Diese Ausrichtung wird durch das Recken des Fadenrohlings 6 (Fig. 2) zum Mähfaden 1 (Fig. 3) herbeigeführt. Beim Recken orientieren sich die polymeren Kettenmoleküle des Kunststoffs 4 in Richtung der Längsachse 5 und führen dabei gleichzeitig eine Umorientierung der stochastisch verteilten Partikel 3 nach Fig. 5 in den Zustand nach Fig. 6 herbei.

Fig. 7 zeigt eine vergrößerte Darstellung der Einzelheit VII nach Fig. 4 in einer Querschnittsdarstellung des Mähfadens 1. Auch hier sind die Partikel 3 in ihrer durch den Reckvorgang umorientierten Lage gezeigt. Aus der Zusammenschau der Fig. 6 und 7 ergibt sich, dass jeder einzelne plättchenförmige Partikel 3 eine Ebene aufspannt, die parallel zur Längsachse 5 und im Übrigen entweder radial oder tangential bzw. sekantenförmig dazu liegt. In dieser jeweiligen Ebene wirken die Partikel 3 verstärkend auf den Kunststoff 4. Da die Partikel 3 sämtlich zumindest näherungsweise parallel zur Längsachse 5 (Fig. 6) liegen, ist der Mähfaden 1 in Richtung seiner Längsachse 5 verstärkt. Außerdem ergibt sich aus der Zusammenschau der Fig. 4 und 7, dass sämtliche Partikel 3 in ihrer jeweiligen Ebene radial bzw. tangential oder sekantenförmig zur Längsachse 5 liegen und damit den Querschnitt des Mähfadens 1 verstärken. Der Querschnitt des Mähfadens 1 kann sich deshalb nicht oder nur ein eingeschränkt aufspalten bzw. aufspleißen.

Insgesamt ist damit der Mähfaden 1 hinsichtlich seiner hauptsächlich auftretenden Betriebs- und Verschleißlasten in einer Weise verstärkt, dass eine deutlich erhöhte Lebensdauer zu beobachten ist.

## Patentansprüche

1. Verwendung eines Mähfadens, wobei der Mähfaden aus einem mit Partikeln (3) gefüllten Kunststoff (4) extrudiert ist, **dadurch gekennzeichnet, dass** die Partikel (3) plättchenförmig sind und der Mähfaden nach dem Extrudieren gereckt ist, und zwar derart, dass die plättchenförmigen Partikel (3) zumindest vorrangig in Richtung einer Längsachse (5) des Fadens ausgerichtet sind, wobei der Mähfaden (1) für einen handgeführten Freischneider (2) verwendet wird.

2. Verwendung nach Anspruch 1,
**dadurch gekennzeichnet, dass** die plättchenförmigen Partikel (3) Nanopartikel sind und insbesondere in ihrer Ebene eine Größe von 500 nm bis 1000 nm und eine Dicke von 0,5 nm bis 2 nm aufweisen.

3. Verwendung nach Anspruch 1,
**dadurch gekennzeichnet, dass** die Partikel (3) durch ein Schichtsilikat gebildet sind.

4. Verwendung nach Anspruch 1,
**dadurch gekennzeichnet, dass** der Gewichtsanteil der Partikel (3) im Mähfaden (1) in einem Bereich von einschließlich 1 % bis einschließlich 5 % und bevorzugt in einem Bereich von einschließlich 2 % bis einschließlich 3 % liegt.

5. Verwendung nach Anspruch 1,
**dadurch gekennzeichnet, dass** der Kunststoff (4) Polyamid ist.

## Claims

1. Use of a cutting line, the cutting line being extruded from a plastic material (4) filled with particles (3),
**characterised in that** the particles (3) are platelet-shaped and the cutting line is stretched following the extrusion in such a way that the platelet-shaped particles (3) are at least primarily oriented in the direction of a longitudinal axis (5) of the line, the cutting line (1) being used for a hand-guided string trimmer (2).

2. Use according to claim 1,
**characterised in that** the platelet-shaped particles (3) are nanoparticles and have, in particular in their plane, a size of 500 nm to 1000 nm and a thickness of 0.5 nm to 2 nm.

3. Use according to claim 1,
**characterised in that** the particles (3) are represented by a layered silicate.

4. Use according to claim 1,
**characterised in that** the parts-by-weight value of the particles (3) in the cutting line (1) lies in a range of 1% to 5% inclusive, preferably in a range of 2% to 3% inclusive.

5. Use according to claim 1,
**characterised in that** the plastic material (4) is polyamide.

## Revendications

1. Utilisation d'un fil de tonte, le fil de tonte étant extrudé à partir d'une matière plastique (4) chargée de particules (3),
**caractérisée en ce que** les particules (3) sont lamelliformes et le fil de tonte est étiré, après l'extrusion, de telle sorte que les particules lamelliformes (3) soient orientées au moins en priorité dans le sens d'un axe longitudinal (5) du fil, le fil de tonte (1) étant utilisé pour une débroussailleuse à main (2).

2. Utilisation selon la revendication 1,
**caractérisée en ce que** les particules lamelliformes (3) sont des nanoparticules et présentent en particulier dans leur plan une taille de 500 nm à 1000 nm et une épaisseur de 0,5 nm à 2 nm.

3. Utilisation selon la revendication 1,
**caractérisée en ce que** les particules (3) sont formées par un phyllosilicate.

4. Utilisation selon la revendication 1,
**caractérisée en ce que** la proportion en poids des particules (3) dans le fil de tonte (1) est située dans une plage de 1% inclus à 5% inclus, et de préférence dans une plage de 2% inclus à 3% inclus.

5. Utilisation selon la revendication 1,
**caractérisée en ce que** la matière plastique (4) est du polyamide.
